# EUROPEAN PATENT SPECIFICATION

(11) **EP 3 753 701 B1**
(45) Date of publication and mention of the grant of the patent: **23.03.2022**
(21) Application number: 20173846.5
(22) Date of filing: 11.05.2020
(51) Int. Cl.: B29C 37/00, E04C 2/22, B29C 33/12, B29C 44/12, B29C 44/58, B29C 33/30

(54) **MULTIPURPOSE MOULD STRUCTURE FOR THE EXPANSION AND SINTERING OF POLYSTYRENE**
MEHRZWECKFORMSTRUKTUR ZUR EXPANSION UND ZUM SINTERN VON POLYSTYROL
STRUCTURE DE MOULE À USAGES MULTIPLES POUR L'EXTENSION ET LE FRITTAGE DE POLYSTYRÈNE

(30) Priority: 13.05.2019 IT 201900006761
(43) Date of publication of application: 23.12.2020
(73) Proprietor: Candiracci, Angelo, 61032 Fano (IT)
(72) Inventor: Candiracci, Angelo, 61032 Fano (IT)
(74) Representative: Kuhnen & Wacker Patent- und Rechtsanwaltsbüro PartG mbB

(56) References cited:
- EP-A1- 1 897 668
- WO-A1-97/39205
- WO-A1-2016/102486
- FR-A1- 2 613 663

## Description

### DETAILED DESCRIPTION

### State of the art

Sintered expanded polystyrene (abbreviated as EPS), also commonly called expanded polystyrene, is a thermoplastic resin derived from benzene, with characteristics of lightness, isothermia, waterproof, dimensional stability, rigidity and impact resistance, self-extinguishing, toxicity which makes it particularly suitable for the production of a plurality of prefabricated building products.

### Physical characteristics of EPS

As regards lightness, EPS has low volume mass or density [from 10 (ten) to 60 (sixty) kg/m³].

As regards isothermia, it is one of the main characteristics of EPS and it is facilitated by the fact that it is 98% formed by air. This air is enclosed in cells so small to prevent the convective motions. Thus, heat transmission may occur solely by conduction, very low in the air, and by radiation, which rapidly reduces upon the multiplication of the screens consisting of the walls of the cells. Remaining balanced with respect to the external air, the internal air stabilises heat conductivity over time.

As regards waterproof features and, on the contrary, permeability to water vapour, EPS is not a hygroscopic material, thus products made of EPS do not reveal inhibition phenomena by capillarity. Thus, EPS' right value of permeability to vapour allows the transpiration of the products obtained therewith, thus not vulnerable to mould and the like.

As regards dimensional stability, EPS is isotropic, given that the products obtained therewith are not subjected to tensioning, with ensuing deformation and breakage, regardless of the time of utilisation thereof; as a matter of fact, there is a physical-mechanical state of balance with homogeneity of characteristics reproduced in all points of the product. Such characteristic is mainly influenced by the type of expansion the cells made of the material have. As a matter of fact, the cell structures that expand within the space of a few millimetres of diameter are extremely regular, with almost identical micro-spheres.

As regards rigidity and reaction to mechanical stresses, the relation between stresses and deformations is linear up to 3% of deformation. Beyond this limit there is a permanent deformation of the cell structure without breakage.

As regards self-extinguishing characteristics, EPS has delayed flame propagation characteristics. The products tested as regards reaction to fire have resistance values solely exceeded by those made of incombustible material.

As concerns non-toxicity and biological tolerance, EPS is not toxic, it is not a source of nutrition for any living being, micro-organisms included; EPS does not rot, it is not attacked by mould and it is completely recyclable, biologically neutral, neutral to odour and neutral to contact with skin.

As regards production technology, expanded polystyrene should be subjected to several transformation processes directly related to the intended use thereof before being used.

### Processing: pre-expansion

At the beginning, the material is in form of fine beads or spheres, from one to three millimetres of diameter, added with an expanding agent; the production of semi-finished products and polystyrene - expanded polystyrene - products occurs in three main stages.

Pre-expansion: the expandable polystyrene beads or spheres are pre-expanded, generally by means of vapour at a temperature above 90 degrees centigrade, in the so-called pre-expander. In the pre-expansion treated with vapour, first the raw material softens and the expanding agent evaporates, causing the swelling of the beads. Following the evaporation of the expanding agent, the beads amplify up to sixty times their initial volume. The duration and intensity of this first operation determine the volume mass of the finished product. A closed cell structure, fundamental for the subsequent use as heat insulator, is formed in this process in the expanded polystyrene beads. The degree of expansion, which essentially depends on the duration of heat treatment in the pre-expander, determines the apparent volume mass of the products made of expanded polystyrene and thus all their physical characteristics.

Maturation of the pre-expanded product: at this stage, the polystyrene beads are stationed for a given period of time in aerated silos. Upon cooling, the expanding material and water vapour residues condensate in the single cells. The vacuum thus formed is nullified by the air which spreads in the cells; in this manner, the pre-expanded polystyrene or expanded polystyrene beads reach the stability required for the subsequent steps.

### Modelling, sintering

Modelling the product: pre-expanded and stabilised polystyrene beads may thus be transformed into products or semi-finished products in various ways:
For moulding blocks and cutting polystyrene or sintered expanded polystyrene slabs; it is the most used system: the block-making device, consisting of a parallelepiped-shaped element provided with micro-holes for the inlet of vapour on all sides, is filled with expanded polystyrene and subjected to a new injection of the saturated vapour; temperatures between 110 - 120 degrees centigrade are attained at this stage; the beads swell further and joined to each other due to their internal pressure, i.e. they are sintered. The more the EPS has high density, the more the block is subjected to pressure such to facilitate a better sintering. After a brief cooling period, the blocks are extracted and preferably stored for a variable period of time ranging from a few days to two months, a period during which they reach the stability required for the various applications. From here, the expanded polystyrene blocks are picked up for cutting into slabs, which occurs with hot wire cutting lines and other possible mechanical operations, such as shaping using numeric control pantographs or by milling.

For extrusion-drawing: subsequently to polymerisation, polystyrene or expanded polystyrene is joined to the expanding agent and other possible additives in a drawing machine, which mixes the ingredients in molten state and extrudes the mixture from a die, usually in form of a flat slab, which are immediately sintered and expired and, cooling, stiffen in the expanded form.

By moulding slabs or other expanded polystyrene products: EPS slabs are moulded individually in suitable numerical control automatic machines. This leads to the advantage of directly obtaining the desired shape, without further mechanical machining processes, sintered beads even in this case; in the EPS, good sintering, i.e. the "bonding" of the beads to each other is very important, actually crucial. The more the EPS has high density, the more the block is subjected to pressure such to facilitate a better sintering.

### Specifically, for the construction industry: panels with "exoskeleton"

In the construction industry, the technique of moulding blocks and cutting slabs may be appropriate and cost-effective in the manufacturing of construction panels consisting exclusively of EPS without reinforcements of any kind or of construction panels with "exoskeleton", i.e., typically, prefabricated panels of the "sandwich" type made of steel wire mesh and sintered expanded plastic material, formed precisely by a sheet-like core made of sintered expanded plastic material, sandwiched between two electrowelded steel wire meshes, mutually joined, usually also by electrowelding, by steel wire segments to form connection crosspieces perforating said core.

The monolithic product thus made can be arranged modularly housed and plaster-covered, held by the metal meshes, to form prefabricated walls with optimal resistance, anti-seismic, heat insulation, soundproof and fireproof characteristics.

Furthermore, a twinned pair of panels thus made may be used, with excellent results, as a disposable formwork, i.e. as a container for the concrete cast, possibly further reinforced, between the two panels, which remain incorporated therewith, embedded to collaborate towards forming the walls, contingently plaster-covered on the outer faces similarly to the single panel.

### Specifically, for the construction industry: panels with "endoskeleton"

In order to obtain panels with endoskeleton and/or accessories embedded into the sintered polymeric mass, it is crucial to mould into slabs using a method which provides for moulding the composite complex, by aggregating a reinforcement - preferably made of steel - to the sintered expanded polymeric mass, still preferably of the high density type [from 30 (thirty) to 60 (sixty) kg/m³], by embedding rod-like steel elements thereinto, preferably preassembled to constitute a mesh or cage of electrowelded elements, still dimensioned and shaped as a function of the shape of the product and/or assembly needs and/or assembly and joining application means; arranging such steel rod-like elements in the polystyrene expansion mould; pouring - into the mould - incoherent granules or beads obtained from the polymerisation of styrene, with suitable grain size and volume to attain a high density finished product [from 30 (thirty) to 60 (sixty) kg/m³]; expansion and sintering i.e. grouping incoherent polystyrene through contact with water vapour and temperature exceeding ninety degrees centigrade injected into the mould and the ensuing entrapment of the reinforcement in the monolithic mass thus attained to obtain a solid geometry of panel and a prefabricated construction element defined by the mould, of internally reinforced sintered expanded polystyrene.

### Limits of the prior art

The moulds according to the prior art are substantially of the single-format type, or only laboriously adaptable to different formats and for limited dimensional variants; which is an intuitive major manufacturing limit, thus substantially requiring a mould for each format, or almost; or to overcome this limit by scaling adaptations in reduction by cutting the elements; this presents considerable contraindications in terms of scrap, waste, precision and processing times.

A technology of partial automation and modularity is illustrated in WO 2016 102486 A1 that discloses a mould structure according to the preamble of claim 1.

### Objects of the invention

In this context, the main object of the present invention is to provide a mould structure for expansion and sintering of polystyrene which is particularly suitable for manufacturing sintered expanded polystyrene panels for construction purposes, internally reinforced with an endoskeleton and in any case with elements embedded in the polymeric mass.

Another object of the present invention is to achieve the above object by means of a structure which allows to vary the surface of the panel.

Another object of the present invention is to achieve the above object by means of a structure which allows to vary the thickness of the panel.

Another object of the present invention is to achieve the above object by means of a structure which allows to vary the perimetral dimensions of the panel.

Another object of the present invention is to achieve the above object by means of a structure which allows to provide for openings in the panel.

Another object of the present invention is to attain the above object by means of a structure suitably large to produce the prefabricated construction panels made of reinforced sintered expanded polystyrene in a single piece, but simultaneously suitably modularly adapted to produce, within the maximum perimeter defined thereby, substantially any conformation and shape of a reinforced polystyrene panel and accessorised with elements incorporated elements embedded in the sintered polystyrene mass exclusively where required by the specific needs.

Still another object of the present invention is to attain any one of the above objects through an incremental modular structure with reference to the dimensions, both in terms of extension and thickness, of the panels that can be produced therewith.

A further object of the present invention is to attain any one of the preceding objects through a structure that allows the easiest load possible of the articulated and voluminous reinforcing means intended to be incorporated in the sintered polystyrene mass and equally relatively easy unloading and removal of the finished product.

A further object of the present invention is to attain any one of the above objects through a structure that is as productive, simple and quick as possible in the variation of the formats of the products, with the due proportions with respect to the size and complexity of the products in question.

Still, a further object of the present invention is to attain any one of the above objects through a device that is simple and functional, safe to use and relatively inexpensive considering the actual results attained therewith.

### Summary of the solution concept

These and other objects are all attained with the multipurpose mould structure for the expansion and sintering of polystyrene (eps, polystyrene), according to the present invention as defined by the claims, for manufacturing prefabricated panels for construction purposes (6), made of reinforced or non-reinforced sintered expanded polystyrene consisting, when reinforced, of a composite complex obtained by aggregating steel to the sintered expanded polymeric mass, preferably of the high-density type, by embedding - thereinto - typically wire-like/rod-like metal elements preassembled to form a cage (5) made of electrowelded elements, often provided with further metalware such as hinges and/or joining strips and/or the like, comprising an operating unit (1A, 1B)) consisting of at two half-shells (7, 8) with variable geometry and shape to modify the volume, the size and the conformation of the mould compartment or chamber (2), served by mechanisms for supplying (20, 21) and loading (23, 25) the reinforcement means (5) or elements to be embedded in the moulded sintered mass, as well as mechanisms (4) for unloading (21, 31) and removing (26, 27) the moulded panels (6); said operating unit (1A) being designated to be twinned to at least an identical one (1B) to form a single mould compartment or chamber (2) with an area at least twice as large.

### Description of the attached drawings

Further characteristics and advantages of the multipurpose mould structure for the expansion and sintering of polystyrene according to the present invention will be more apparent from the following detailed description of a preferred but non-exclusive embodiment thereof, represented solely by way of non-limiting example with reference to the attached drawings, wherein:
Figure 1 illustrates an elevational perspective view of an embodiment of a multipurpose mould module for expanding and sintering polystyrene according to the present invention;
Figures 2 and 3 illustrate a close perspective view of an embodiment of a multipurpose mould module according to the present invention with half-shells diverged respectively without and with interposition of the panel produced;

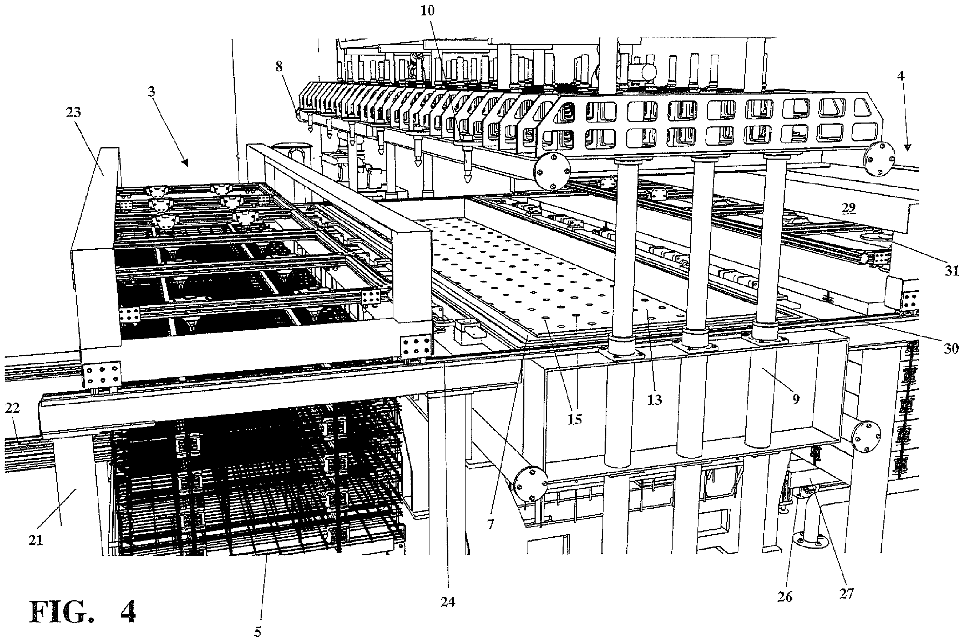

Figure 4 illustrates a perspective view of an embodiment of a multipurpose mould module according to the present invention with half-shells diverged with the supply and unloading modules interlocked thereto;

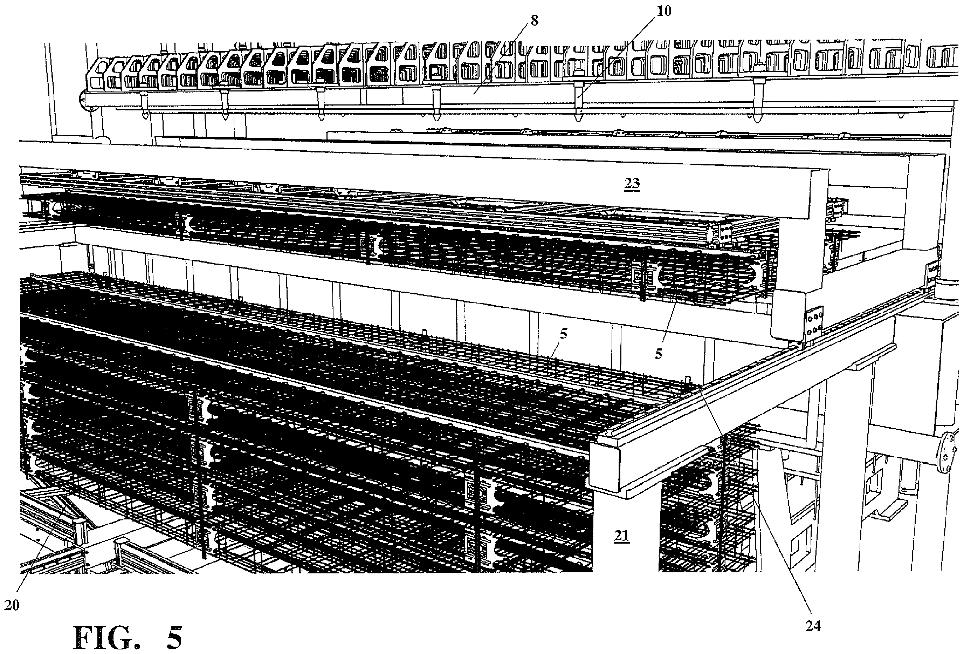

Figure 5 illustrates a perspective view of a supply module interlocked to an embodiment of a multipurpose mould module according to the present invention;

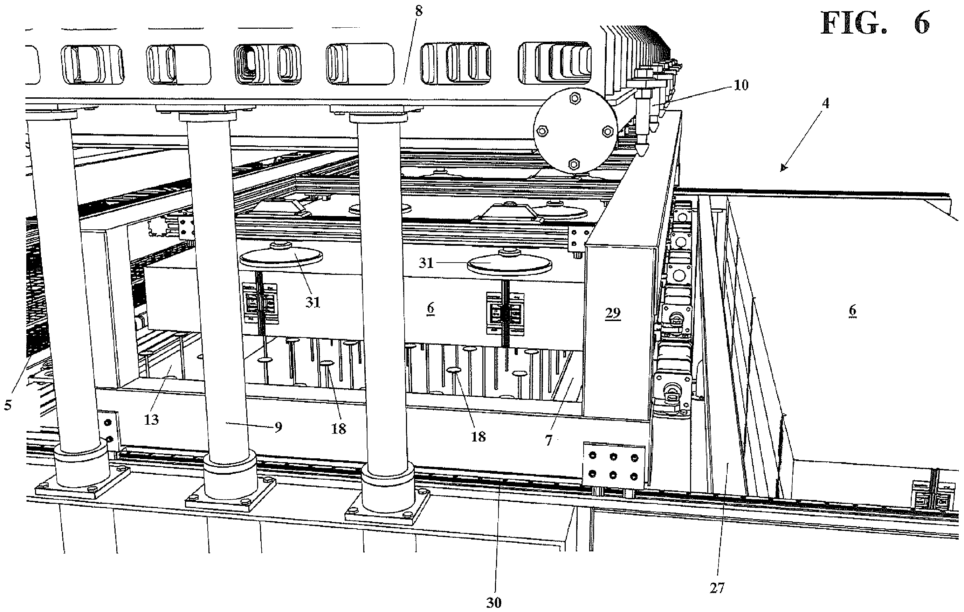

Figure 6 illustrates a perspective view of an unloading module interlocked to an embodiment of a multipurpose according to the present invention;

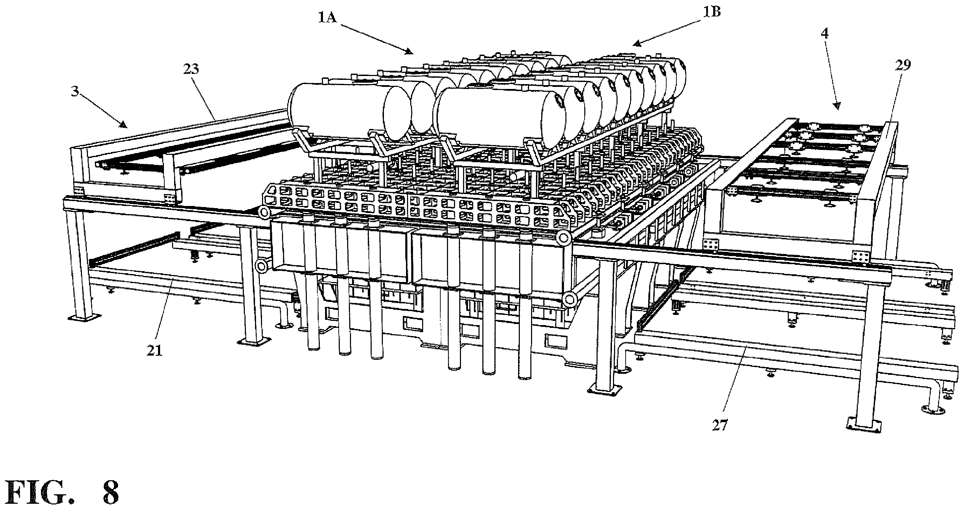

Figures 7 and 8 illustrate two elevational perspective views of a pairing embodiment of multipurpose mould modules for expanding and sintering polystyrene according to the present invention;

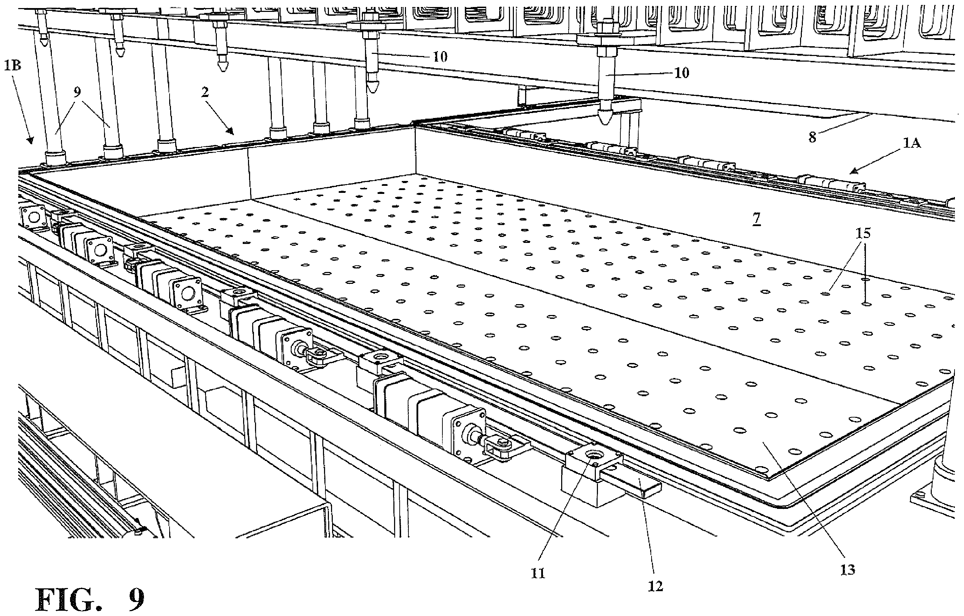

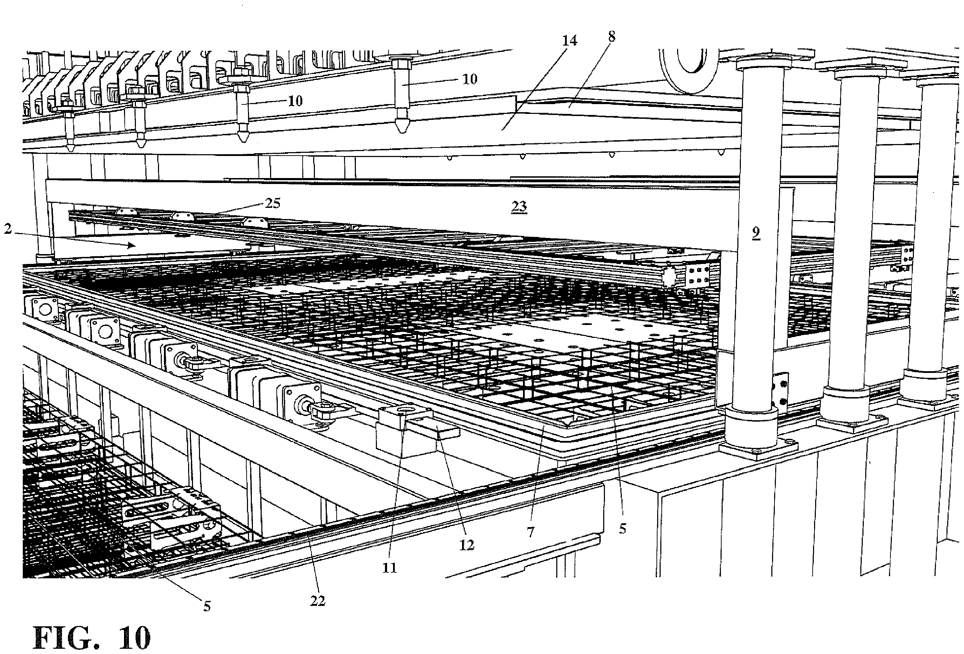

Figures 9 and 10 illustrate perspective views of an embodiment of multipurpose mould modules paired with half-shells diverged respectively without and with interposition of reinforcement designated to complete the panel produced;

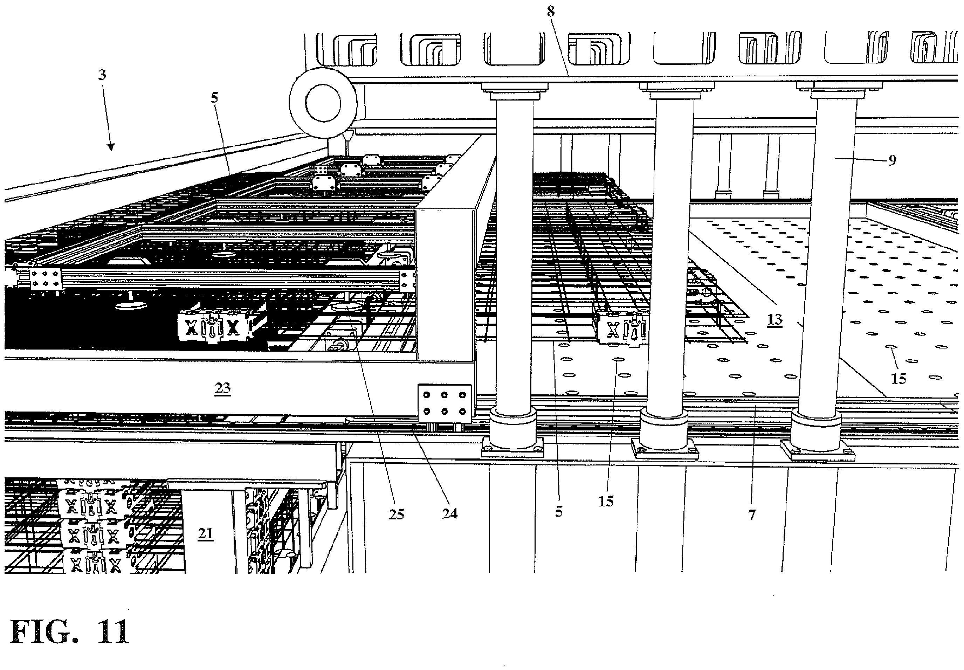

Figure 11 illustrates an elevational perspective view of a supply module interlocked to an embodiment of multipurpose mould modules paired according to the present invention;

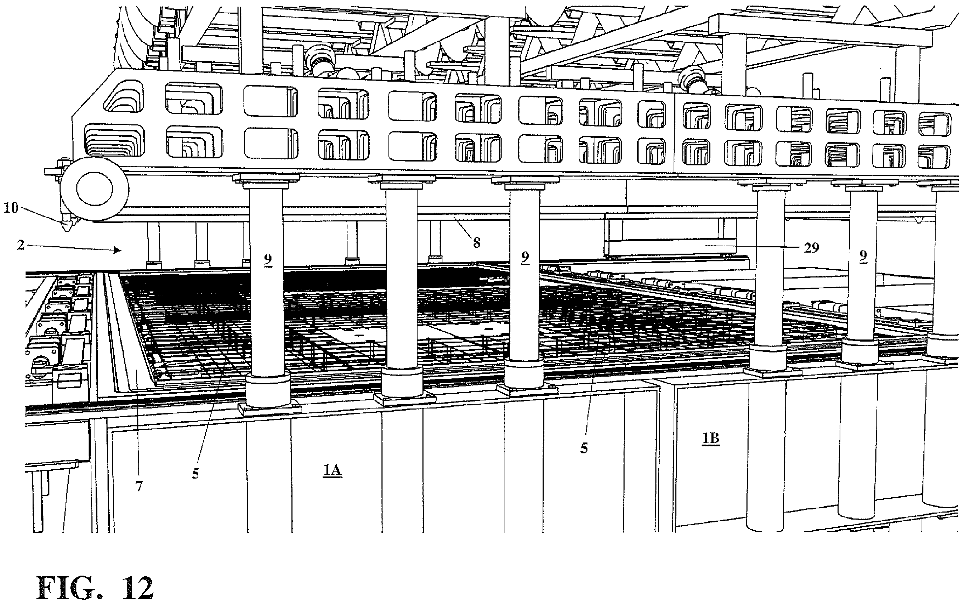

Figures 12 and 13 illustrate a perspective view of an embodiment of multipurpose mould modules according to the present invention with half-shells diverged respectively before and after producing a panel.

### Static description of a preferred embodiment

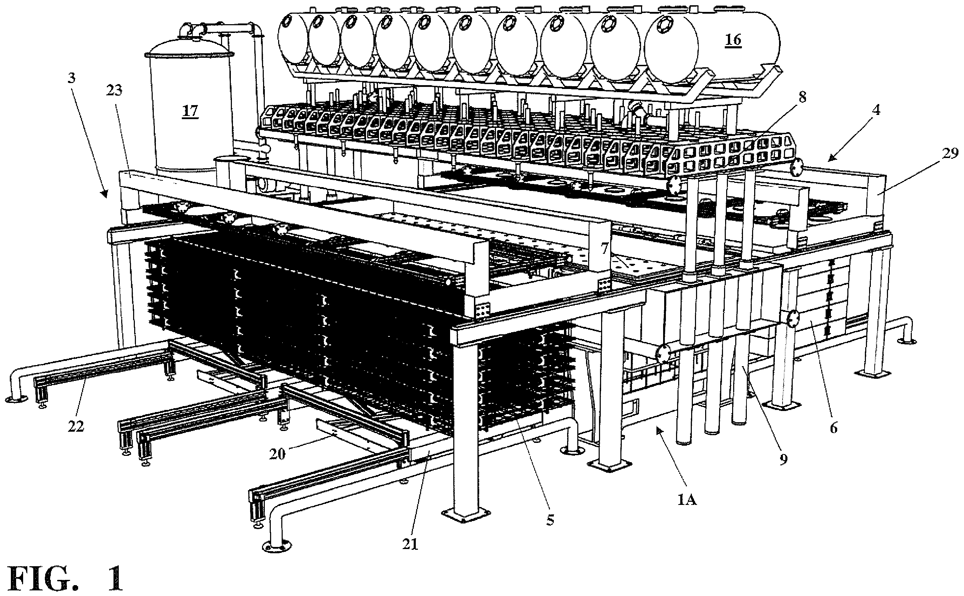

With reference to such figures, and in particular to figure 1, a first multipurpose mould module for expanding and sintering the polystyrene according to the present invention, to which a separate supply module 3 of reinforcement trestles 5 on one front and a separate unloading module 4 of the formed panels 6 on the opposite front, are interlocked is indicated in its entirety - substantially parallelepiped - with reference number 1A.

All the constituent elements and kinematic mechanisms, unless otherwise specified, must be considered assembled on suitable supporting metal structures, appropriately dimensioned and interconnected to obtain static and dynamic support of the constituent elements, devices and kinematic mechanisms.

The mould 1A consists of a mould chamber 2 defined by a lower shell 7 (mould) and an upper shell 8 (counter-mould), which - in the illustrated embodiment - have a rectangular perimeter; suitable to be diverged and approached by means of hydraulic pistons 9, arranged on the two sides free from the supply 3 and the discharge 4 modules, as well as tightenable by means of pins 10 interacting with seats 11 of the bolt-type 12.

The bottom 13 of the lower shell 7 and the bottom 14 of the upper shell 8 have a network of holes 15, duly controlled by valves automatically controlled by the computerized logic which controls the whole machine, for the pouring into the mould 2 of the EPS beads supplied by a plurality of tanks 16 arranged above the upper shell, for creating the vacuum inside the mould 2 by means of a pump 17 and for supplying the sintering steam from a suitable installation.

The bottom 13 of the lower shell 7 is movable, in order to vary the volume of the mould chamber 2, by means of a system of hydraulic plungers, not illustrated.

The bottom 13 of the lower shell 7 is also provided with a plurality of pneumatically actuated ejectable mushrooms 18 which can be displaced both independently and together with the lower bottom 13, together with which they are suitable to translate upon the volume variation of the mould chamber 2; the functionality of the ejectable mushrooms 18 can be selectively activated or deactivated in the operation of the machine as a function of the kind and type of the product subject of production at that time.

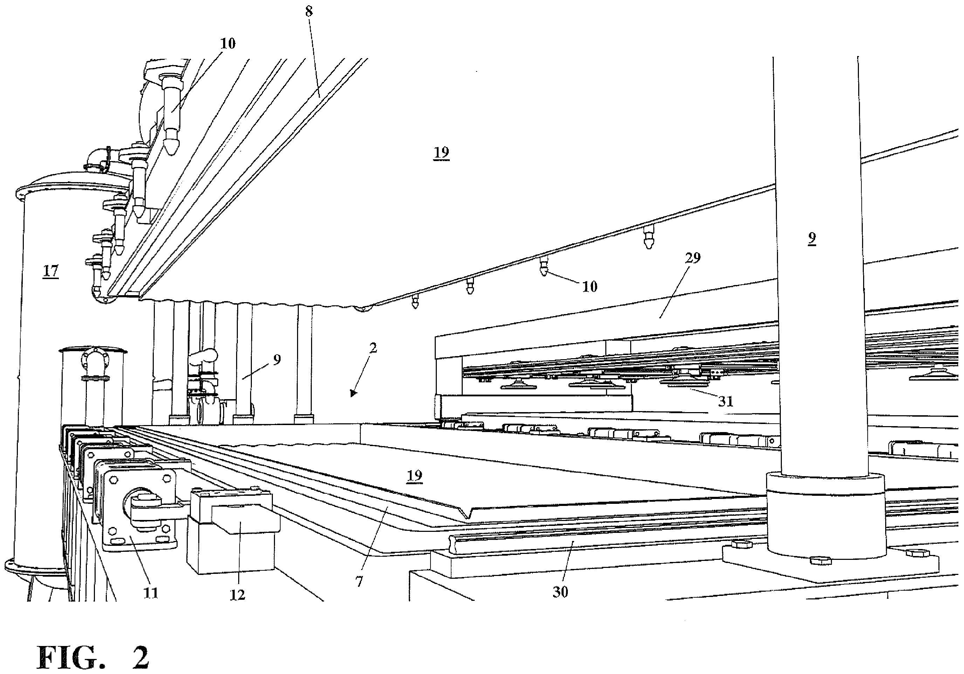

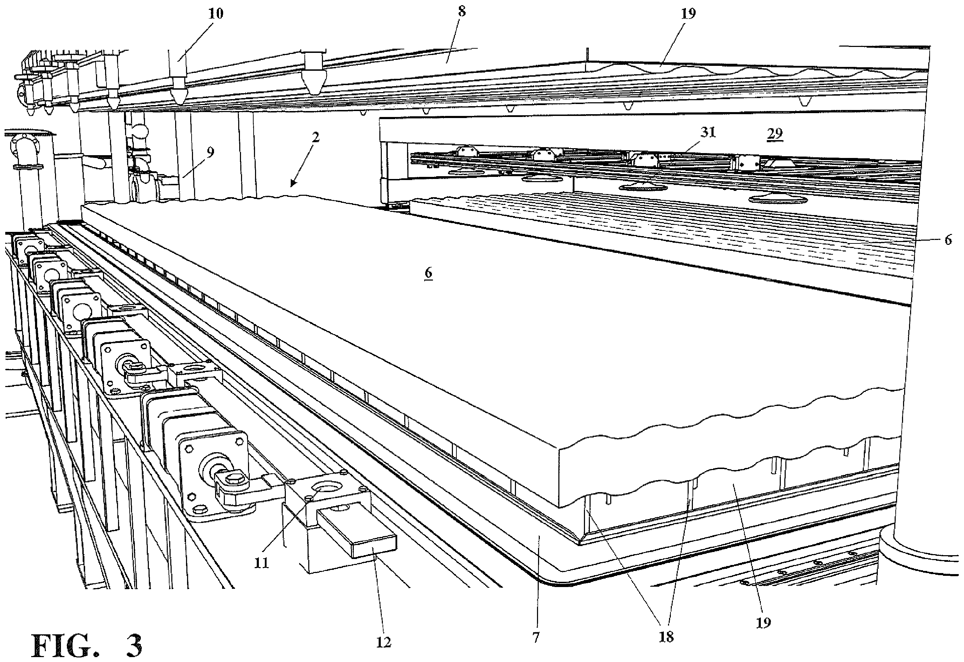

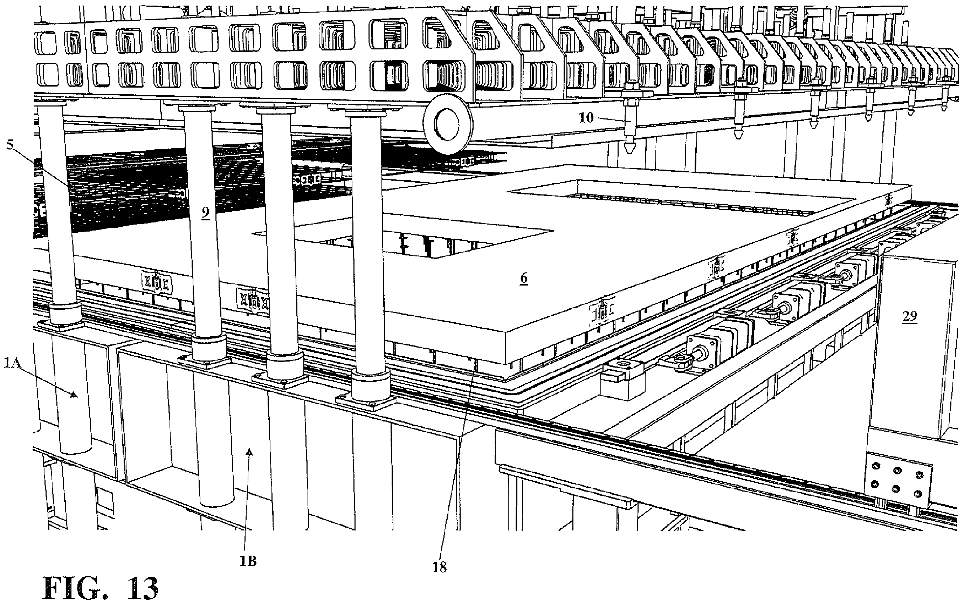

The bottom 13 of the lower shell 7 and the bottom 14 of the upper shell 8 are suitable to be coated with respective surface-shaped matrices 19, undulated in the embodiment illustrated in figures 2 and 3, in order to achieve any surface conformation of the extended faces of the formed panels 6; such matrices can also be located in circumscribed areas of the mould chamber 2 and also have a thickness corresponding to the contingent depth of the mould chamber 2, to obtain through holes in the formed panels 6, for example windows and doors in the formed panels 6 intended to constitute walls (see for example figure 13).

The supply module 3 comprises a pantograph elevator 20 and interchangeable supply carriages 21 on guides 22 to the ground for supplying stacks of reinforcement trestles 5, as well as a support trolley 23 for the reinforcement trestles 5 sliding on side rails 24, suitable for picking up single reinforcement trellis 5 from the top of the stack, for example by means of magnets 25, and translating them in succession in the lower shell 7 of the mould 2.

On the other hand, the unloading module 4 comprises a pantograph descender 26 and interchangeable removal carriages 27 on ground guides 28 for removing stacks of moulded panels 6, as well as an upper overhead crane 29 sliding on side rails 30, suitable for picking up moulded panels 6, for example by means of suction cups 31, from the lower shell 7 of the mould 2 and move them in succession by stacking them from above on the removal carriages 27.

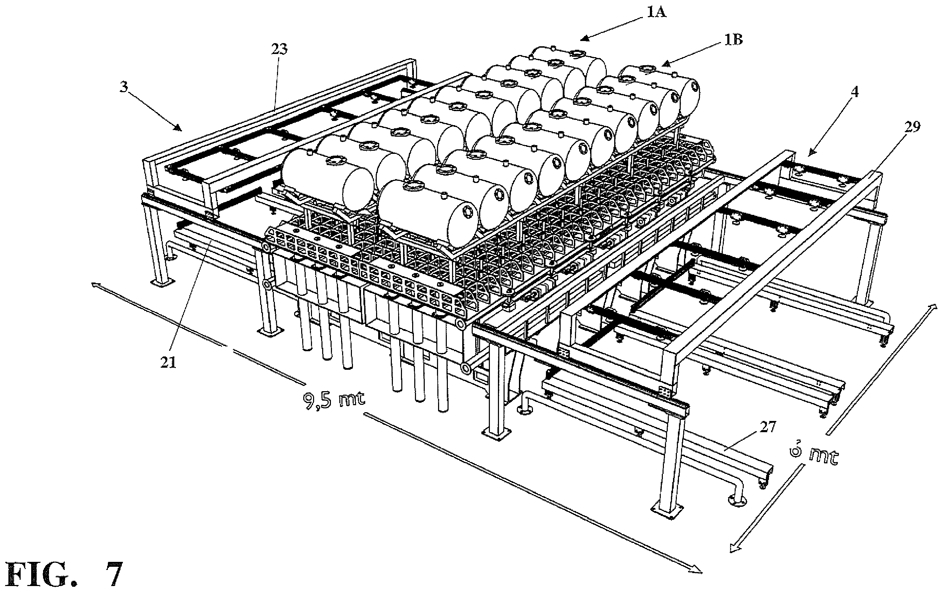

Figures 7 and subsequent figures illustrate two mould modules 1A and 1B combined, for the purpose of doubling the mould chamber 2, with mutual twinning adaptation by exclusively reducing the shared intermediate edges in the direction of insertion of the plates 5 and removal of the formed panels 6, without prejudice to providing further components for the functions outlined hereinafter.

### Dynamic description of the preferred embodiment

Thus, having completed the static description of a preferred embodiment of the multipurpose mould structure for the expansion and sintering of polystyrene obtained according to the present invention, below is the dynamic description, i.e. the operation:
all the automatic functionalities of the modules 1, 2 and 3 of the machine are to be understood as controlled and managed by computerised logic, which offers the operator wide possibility of variation and adjustment of all the relative parameters, in order to adapt it to the specific functions required of the machine in the specific case.

The first of these functions is the polyvalent dimensional adjustment of the mould chamber 2:
in its thickness, by displacing the bottom 13 of the lower shell 7, by means of the hydraulic devices not illustrated, to which the bottom 13 of the lower shell 7 is interlocked;
in its expansion extension, by coupling two or more mould modules 1A and 1B;
in its restriction extension, by inserting - into the mould chamber 2 - elements which are obstructive to the spreading of the beads and to the relative sintering, by means of a perimetral dimensions of the panel 6 and/or where it is intended to project an opening or through hole into the panel 6;
in its surface shape, through possible insertion on the bottom 13 of the lower shell 7 and/or on the bottom 14 of the upper shell 8 of the mould 1, or of the mould chamber 2, of dies 19 for shaping the surface of the extended faces of the panel 6.

If the panel 6 to be produced is not of the type made of composite material, that is, it is not internally reinforced, or it still does not have strengthening and/or functional elements embedded within the sintered polymeric mass, in other words it is made of pure polystyrene, the production functions of the machine include:
closing the mould 1, by means of the descent of the upper shell 8 onto the lower shell 7, by means of the hydraulic devices 9;
mutual tightening constraint of the shells 7 and 8, in order to provide adequate opposition to the pressure that will develop within the mould chamber 2, by inserting pins for locking the upper shell 8 into the respective seats 11 of the lower shell 7 and relative slide trapping of the bolts 12, suitably driven linearly with any suitable device according to the prior art;
pouring - into the mould chamber 2 thus tightened - an appropriate amount of EPS beads from the tanks 16, with simultaneous creation of a vacuum within the mould chamber 2 by means of the vacuum pump 17, in order to facilitate instantaneous suctioning and pouring of the EPS spherules and relative homogeneous diffusion in the entire volume of the mould chamber 2, at the amount required by the desired density in the finished product, as per appropriately programmed computerised logic;
supplying water vapour flows once the delivery of the volume of polystyrene beads for one mole and an appropriate displacement to the specific panel 6 to be formed have been completed, which produce expansion and sintering of the polystyrene mass;
unclosing the mould chamber 2 by opening the shells 7 and 8, after mutual release, and ejection of the panel 6 formed therein from the bottom 13 of the lower shell 7 by means of the plurality of ejectable mushrooms 18;
translation of the upper overhead crane 29 for removing the single panels 6 formed in the area of the open mould chamber 2, picking up the panel 6 formed therein by means of the suction cups 31 and relative transfer, with deposition apically to the stack of panels 6 already formed in the previous operating cycles;
simultaneous descent of a step of panel thickness by the pantograph descender 26 of the unloading module 4, until the loading of the removal trolley 27 of the stacks of formed panels 6 is completed, with ensuing removal on the ground and the arrival - in its place - of a new empty carriage 27 for loading, and so on.

Where, conversely, the panel 6 to be produced is of the type made of composite material, i.e. internally reinforced, or still integrated with reinforcement trestle 5 and/or strengthening elements and/or functional elements embedded within the sintered polymeric mass, the production functions of the machine are: upstream of those described above:
the supply module 3 is supplied with a succession of stacked reinforcement trestles 5 supply carriages 21, in an appropriate position under the upper overhead crane 23 for picking up and translating the single plates 5;
raising of the stacked reinforcement trellis 5 to subsequent levels, by means of the pantograph elevator 20, which always positions the top trestle 5 of the stack at the removal level, hereinafter, after picking up the previous one, until exhaustion and replacement with a new carriage 21 for supplying stacked reinforcement trestles 5;
gripping a single reinforcement 5 from the top of the stack, by means of the magnets 25, by the upper overhead crane 23 for picking up and translating the single reinforcements 5, relative translation and deposition in the lower shell 7 of the mould 1;
closing the mould 1, by means of the descent of the upper shell 8 onto the lower shell 7, by means of the hydraulic devices 9;
operating continuation as already described above for non-reinforced panels.

### Advantages of the invention

As observable from the detailed description of preferred but non-exclusive embodiments above, the modular mould structure for expanding and sintering polystyrene according to the present invention, offers advantages corresponding to the attainment of the preset objects, to which reference shall be made to identify these and other corresponding advantages:
for this purpose, main reference is made to the object of the invention which is that of obtaining the sintering of reinforced polystyrene panels with the common denominator of having large dimensions, but differentiated by the shape, accessories and dimensions thereof, for obtaining self-referential building prefabricated products for building innovative constructions exclusively obtained using high density sintered reinforced polystyrene panels;
in this context, the multipurpose mould structure according to the present invention allows to mould high-density reinforced or less sintered polystyrene panels, substantially of any size, thickness, shape and accessorising, which the constructive design and technique of the industry may require;
all in terms of marked automation, with quick supply of the reinforcement and removal of the product and an equally quick moulding for the immediate positioning of the supply reservoirs of the beads distributed homogeneously over the entire mould area, i.e. without tortuous and/or extended ducts which lengthen moulding times and yields,

### KEY TO REFERENCE NUMBERS

- 1A): first multipurpose mould module
- 1B): second multipurpose mould module
- 2 ): mould chamber
- 3 ): supply module
- 4 ): unloading module
- 5 ): reinforcement trellis
- 6 ): panels
- 7 ): lower shell of the mould
- 8 ): upper shell of the mould
- 9 ): mould closing and opening hydraulic plungers
- 10 ): tightening pins
- 11 ): seats for tightening pins
- 12 ): tightening bolts
- 13 ): bottom of the lower shell of the mould
- 14 ): bottom of the upper shell of the mould
- 15 ): holes on the bottom of the shells of the mould
- 16 ): EPS bead tanks
- 17 ): vacuum pump
- 18 ): ejectable mushrooms
- 19 ): surface shaping dies
- 20 ): pantograph elevator of the supply module
- 21 ): reinforcement supply carriages
- 22 ): guides of the reinforcement supply carriages
- 23 ): upper overhead crane for translation of single reinforcements
- 24 ): guide for the upper overhead crane for translation of single reinforcements
- 25 ): magnets of the upper overhead crane, for translation of single reinforcements
- 26 ): pantograph descender of the unloading module
- 27 ): carriages for removing stacks of formed panels
- 28 ): guides for carriages for removing stacks of formed panels
- 29 ): upper overhead crane for removing single formed panels
- 30 ): rails for the upper overhead crane for removing single formed panels
- 31 ): suction cups for the upper overhead crane for removing single formed panels

## Claims

1. Multipurpose mould structure for the expansion and sintering of polystyrene (eps, polystyrene), for manufacturing prefabricated panels for construction purposes (6), made of reinforced or non-reinforced sintered expanded polystyreneconsisting, when reinforced, of a composite complex obtained by aggregating steel to the sintered expanded polymeric mass, preferably of the high-density type, by embedding - thereinto - typically wire-like/rod-like metal elements preassembled to form a cage (5) made of electrowelded elements, often provided with further metalware such as hinges and/or joining strips and/or the like, comprising at least one mould modular operating unit (1A, 1B) consisting of at least two half-shells (7, 8) said operating unit (1A) being designated to be twinned to at least an identical one (1B) to form a single mould compartment or chamber (2) with an area at least twice as large, **characterized in that** the two half-shells (7, 8) have variable geometry and shape to modify the volume, the size and the conformation of the mould compartment or chamber (2), and **in that** the at least one modular operating unit (1A, 1B) is served by a module (3) with mechanisms for supplying (20, 21) and loading (23, 25) the reinforcement means (5) or elements to be embedded into the moulded sintered mass, as well as a module (4) with mechanisms for unloading (21, 31) and removing (26, 27) the moulded panels (6).

2. Mould structure according to claim one **characterised in that** it comprises a mould chamber (2) defined by a lower shell 7 (mould) and by an upper shell 8 (counter-mould) with rectangular perimeter suitable to be diverged and approached by means of hydraulic or pneumatic plungers (9) positioned on two juxtaposed fronts free from the juxtaposed fronts to which the supply module (3) and the unloading module (4) are respectively associated.

3. Mould structure according to any one of claims one and two **characterised in that** the bottom (13) of the lower shell (7) is movable and can be displaced so as to vary the depth of the lower shell (7) and the volume of the mould chamber (2).

4. Mould structure according to any one of the preceding claims **characterised in that** said mould modules (1A, 1B) can be combined with the aim of doubling the mould chamber (2) with mutual twinning adaptation by eliminating the shared intermediate edges in the direction of insertion of the reinforcements (5) by the module for supplying (3) and removing the formed panels (6) by the unloading module (4).

5. Mould structure according to any one of the preceding claims **characterised in that** the bottom (13) of the lower shell (7) is provided with a plurality of ejectable mushrooms (18).

6. Mould structure according to any one of the preceding claims **characterised in that** the bottom (13) of the lower shell (7) is provided with a plurality of ejectable mushrooms that can be arranged both independently and together with the lower bottom (13), alongside which they are suitable to translate upon the variation of the volume of the mould chamber (2).

7. Mould structure according to any one of the preceding claims **characterised in that** the bottom (13) of the lower shell (7) and the bottom (14) of the upper shell (8) have a network of holes (15) subjected to valves for the pouring - into the mould (2) - of the EPS beads sourced from a plurality of tanks (16) arranged over the upper shell (8), for creating the vacuum in the mould structure (2) and for delivering sintering steam.

8. Mould structure according to any one of the preceding claims **characterised in that** the bottom (13) of the lower shell (7) and the bottom (14) of the upper shell (8) can be tightened by means of pins (10) interacting with seats (11) in a bolt-like fashion (12).

9. Mould structure according to any one of the preceding claims **characterised in that** the bottom (13) of the lower shell (7) and the bottom (14) of the upper shell (8) are suitable to be coated with respective dies (19) with surface shape to obtain any surface shape of the extended faces of the formed panels (6).

10. Mould structure according to any one of the preceding claims **characterised in that** such dies (19) are located in circumscribed areas of the mould chamber (2) and have thickness corresponding to the contingent depth of the mould chamber (2) to obtain through holes in the formed panels (6).

11. Mould structure according to any one of the preceding claims **characterised in that** the supply module (3) comprises an elevator (20) for the stacks of reinforcement trellis (5) and interchangeable supply carriages (21) for supplying the stacks of reinforcement trellis (5) as well as a supply carriage (23) for the reinforcement trellis (5) suitable to pick up single reinforcement trellis (5) from the top part of the stack and translate them in succession to the lower shell (7) of the mould (2).

12. Mould structure according to any one of the preceding claims **characterised in that** the unloading module (4) comprises a descender (26) for the moulded panels (6) and interchangeable removal carriages (27) for removing stacks of moulded panels (6) as well as an upper overhead crane (29) suitable to pick up the moulded panels (6) from the lower shell (7) of the mould (2) and translate them in succession stacking them from above on the removal carriages (27).

## Patentansprüche

1. Mehrzweck-Formstruktur für die Expansion und das Sintern von Polystyrol (eps, Polystyrol), zum Herstellen vorgefertigter Paneele für Bauzwecke (6), die aus verstärktem oder nicht-verstärktem, gesintertem, expandiertem Polystyrol hergestellt werden, das, wenn es verstärkt wird, aus einem Verbundstoffkomplex besteht, der erhalten wird, indem Stahl zu der gesinterten, expandierten Polymermasse, vorzugsweise eines Typs mit hoher Dichte, aggregiert wird, indem darin typischerweise drahtartige/stangenartige Metallelemente eingebettet werden, die vorgefertigt sind, um einen Käfig (5) zu bilden, der aus elektrogeschweißten Elementen besteht, die oft mit weiteren Metallwaren versehen sind, wie z.B. Scharnieren und/oder Verbindungsstreifen und/oder Ähnlichem, aufweisend zumindest eine Modularformbetriebseinheit (1A, 1B), die aus zumindest zwei Halbschalen (7, 8) besteht,
wobei die Betriebseinheit (1A) dafür vorgesehen ist, mit zumindest einer identischen Betriebseinheit (1B) gepaart zu sein, um ein einzelnes Formabteil oder eine einzelne Formkammer (2) mit einer Fläche zu bilden, die zumindest zweimal so groß ist,
**dadurch gekennzeichnet, dass** die zwei Halbschalen (7, 8) eine variable Geometrie und Form aufweisen, um das Volumen, die Größe und die Gleichförmigkeit des Formabteils oder der Formkammer (2) zu modifizieren, und dadurch, dass die zumindest eine Modularbetriebseinheit (1A, 1B) von einem Modul (3) mit Mechanismen zum Zuführen (20, 21) und Beladen (23, 25) der Verstärkungseinrichtungen (5) oder Elemente, die in die geformte, gesinterte Masse eingebettet werden sollen, und einem Modul (4) mit Mechanismen für das Entladen (21, 31) und Entfernen (26, 27) der geformten Paneele (6) versorgt wird.

2. Formstruktur nach Anspruch 1, **dadurch gekennzeichnet, dass** sie eine Formkammer (2) aufweist, die durch eine Unterschale 7 (Form) und eine Oberschale 8 (Gegenform) mit einem rechteckigen Rand definiert ist, die geeignet sind, durch hydraulische oder pneumatische Kolben (9), die an zwei gegenüberliegenden Vorderseiten positioniert sind, die von den gegenüberliegenden Vorderseiten frei sind, denen das Zuführmodul (3) und das Entlademodul (4) jeweils zugeordnet sind, auseinanderzugehen und sich anzunähern.

3. Formstruktur nach einem der Ansprüche 1 und 2, **dadurch gekennzeichnet, dass** der Boden (13) der Unterschale (7) beweglich ist und so verschoben werden kann, dass die Tiefe der Unterschale (7) und das Volumen der Formkammer (2) variiert werden.

4. Formstruktur nach einem der vorgenannten Ansprüche, **dadurch gekennzeichnet, dass** die Formmodule (1A, 1B) mit dem Ziel kombiniert werden können, die Formkammer (2) durch gegenseitige paarige Adaptation zu verdoppeln, indem die gemeinsamen Zwischenkanten in der Einführrichtung der Verstärkungen (5) durch das Zuführmodul (3) eliminiert werden und die geformten Paneele (6) durch das Entlademodul (4) entfernt werden.

5. Formstruktur nach einem der vorgenannten Ansprüche, **dadurch gekennzeichnet, dass** der Boden (13) der Unterschale (7) eine Mehrzahl an auswerfbaren Pilzen (18) aufweist.

6. Formstruktur nach einem der vorgenannten Ansprüche, **dadurch gekennzeichnet, dass** der Boden (13) der Unterschale (7) eine Mehrzahl an auswerfbaren Pilzen aufweist, die sowohl unabhängig von, als auch gemeinsam mit dem unteren Boden (13) angeordnet werden können, wobei sie entlang desselben geeignet sind, sich bei einer Variation des Volumens der Formkammer (2) umzusetzen.

7. Formstruktur nach einem der vorgenannten Ansprüche, **dadurch gekennzeichnet, dass** der Boden (13) der Unterschale (7) und der Boden (14) der Oberschale (8) ein Netzwerk an Löchern (15) aufweisen, die unter Ventilen liegen, um die EPS-Perlen, die aus einer Mehrzahl an Tanks (16) stammen, die über der Oberschale (8) angeordnet sind, in die Form (2) zu gießen, um das Vakuum in der Formstruktur (2) zu erzeugen und um den Sinterstrom zu liefern.

8. Formstruktur nach einem der vorgenannten Ansprüche, **dadurch gekennzeichnet, dass** der Boden (13) der Unterschale (7) und der Boden (14) der Oberschale (8) durch Stifte (10) in einer bolzenähnlichen Weise (12) befestigt werden können, die mit Sitzen (11) interagieren.

9. Formstruktur nach einem der vorgenannten Ansprüche, **dadurch gekennzeichnet, dass** der Boden (13) der Unterschale (7) und der Boden (14) der Oberschale (8) geeignet sind, mit entsprechenden Matrizen (19) mit Oberflächenform beschichtet zu werden, um jede Oberflächenform der erweiterten Flächen der geformten Paneele (6) zu erhalten.

10. Formstruktur nach einem der vorgenannten Ansprüche, **dadurch gekennzeichnet, dass** solche Matrizen (19) sich in umschriebenen Bereichen der Formkammer (2) befinden und Dicken aufweisen, die der abhängigen Tiefe der Formkammer (2) entsprechen, um Durchgangslöcher in den geformten Paneelen (6) zu erhalten.

11. Formstruktur nach einem der vorgenannten Ansprüche, **dadurch gekennzeichnet, dass** das Zuführmodul (3) einen Lift (20) für die Stapel von Verstärkungsgittern (5) und austauschbare Zuführschlitten (21) zum Zuführen der Stapel von Verstärkungsgittern (5) sowie einen Zuführschlitten (23) für die Verstärkungsgitter (5), der geeignet ist, einzelne Verstärkungsgitter (5) von dem oberen Teil des Stapels aufzunehmen und sie nacheinander auf die Unterschale (7) der Form (2) umzusetzen, aufweist.

12. Formstruktur nach einem der vorgenannten Ansprüche, **dadurch gekennzeichnet, dass** das Entlademodul (4) ein Abseilgerät (26) für die geformten Paneele (6) und austauschbare Entfernungsschlitten (27) zum Entfernen von Stapeln geformter Paneele (6) sowie einen oberen Laufkran (29), der geeignet ist, die geformten Paneele (6) von der Unterschale (7) der Form (2) aufzunehmen und sie nacheinander von oben auf den Entfernungsschlitten (27) zu stapeln, aufweist.

## Revendications

1. Structure de moule multiusage pour l'expansion et le frittage de polystyrène (EPS, polystyrène), pour la fabrication de panneaux préfabriqués appliqués à la construction (6), en polystyrène renforcé ou non renforcé, expansé, fritté qui, lorsque renforcés, sont obtenus en y intégrant de l'acier à la masse de polymère expansé, fritté, de préférence de type à haute densité, en y intégrant, de manière caractéristique, des éléments métalliques tels que des fils ou des tiges, préassemblés pour forme une cage (5), d'éléments électro-soudés, souvent munis d'autres équipements métalliques tels que des charnières et/ou des pattes d'assemblage ou moyens analogues, comprenant au moins une unité opérationnelle modulaire de moule (1A, 1B) composée de deux demi-coques (7, 8),
cette unité opérationnelle (1A) étant destinée à être jumelée à au moins une autre unité, identique (1B) pour former un seul compartiment ou chambre de moule (2) ayant une surface au moins deux fois plus grande,
structure **caractérisée en ce que**
- les deux demi-coques (7, 8) ont une géométrie et forme variables pour modifier le volume, la taille et la forme du compartiment ou chambre de moule (2), et
- au moins une unité opérationnelle modulaire (1A, 1B) est munie d'un module (3) avec des mécanismes pour fournir (20, 21) et charger (23, 25) des moyens de renforcement (5) ou éléments à intégrer dans la masse frittée et moulée ainsi que d'un module (4) avec des mécanismes pour décharger (21, 31) et enlever (26, 27) les panneaux terminés (6).

2. Structure de moule selon la revendication 1,
**caractérisée en ce que**
elle comprend une chambre de moule (2) définie par une coque inférieure (7) (moule) et une coque supérieure (8) (contre-moule) ayant une périphérie rectangulaire qui peut être écartée ou rapprochée par des vérins hydrauliques ou pneumatiques (9) placés sur deux faces juxtaposées, dégagées des bords juxtaposés auxquels sont associés respectivement le module d'alimentation (3) et le module de déchargement (4).

3. Structure de moule selon l'une quelconque des revendications 1 et 2,
**caractérisée en ce que**
le fond (13) de la coque inférieure (7) est mobile et peut être déplacée de façon à modifier la profondeur de la coque inférieure (7) et le volume de la chambre de moule (2).

4. Structure de moule selon l'une quelconque des revendications précédentes,
**caractérisée en ce que**
les modules de moule (1A, 1B) peuvent être combinés pour doubler la chambre de moule (2) par une adaptation jumelée, mutuelle, en éliminant les bords intermédiaires partagés, dans la direction d'insertion des renforts (5) par le module l'alimentation (3) et en enlevant les panneaux terminés (6) par le module de déchargement (4).

5. Structure de moule selon l'une quelconque des revendications précédentes,
**caractérisée en ce que**
le fond (13) de la coque inférieure (7) est muni d'un ensemble de champignons éjectables (18).

6. Structure de moule selon l'une quelconque des revendications précédentes,
**caractérisée en ce que**
le fond (13) de la coque inférieure (7) est muni d'un ensemble de champignons éjectables qui peuvent être arrangés à la fois indépendamment et ensemble avec le fond inférieur (13) le long duquel ils peuvent se déplacer selon la variation de volume de la chambre de moule (2).

7. Structure de moule selon l'une quelconque des revendications précédentes,
**caractérisée en ce que**
le fond (13) de la coque inférieure (7) et le fond (14) de la coque supérieure (8) ont un réseau de trous (15) équipés de vannes pour déverser dans le moule (2) des billes EPS venant d'un ensemble de réservoirs (16) installées au-dessus de la coque supérieure (8), pour créer le vide dans la structure de moule (2) et pour distribuer la vapeur de frittage.

8. Structure de moule selon l'une quelconque des revendications précédentes,
**caractérisée en ce que**
le fond (13) de la coque inférieure (7) et le fond (14) de la coque supérieure (8) sont serrés à l'aide de broches (10) coopérant avec des sièges (11) à la manière de boulons (12).

9. Structure de moule selon l'une quelconque des revendications précédentes,
**caractérisée en ce que**
le fond (13) de la coque inférieure (7) et le fond (14) de la coque supérieure (8) peuvent être revêtus de matrices respectives (19) ayant une forme de surface pour donner n'importe quelle forme de surface aux faces déployées des panneaux terminés (6).

10. Structure de moule selon l'une quelconque des revendications précédentes,
**caractérisée en ce que**
les matrices (19) sont placées dans les zones entourées par la chambre de moule (2) et elles ont une épaisseur correspondant à la profondeur appropriée de la chambre de moule (2) pour réaliser des trous dans les panneaux terminés (6).

11. Structure de moule selon l'une quelconque des revendications précédentes,
**caractérisée en ce que**
le module d'alimentation (3) comprend un élévateur (20) pour les piles de treillis de renforcement (5) des chariots d'alimentation interchangeables (21) fournissant les piles de treillis de renforcement (5) ainsi qu'un chariot d'alimentation (23) pour les treillis de renforcement (5), permettant de prendre un seul treillis de renforcement (5) du dessus de la pile et le transférer successivement dans la coque inférieure (7) du moule (2).

12. Structure de moule selon l'une quelconque des revendications précédentes,
**caractérisée en ce que**
le module de déchargement (4) comporte un descenseur (26) pour les panneaux terminés (6) et des chariots amovibles interchangeables (27) pour enlever les piles de panneaux terminés (6) ainsi qu'une grue haute en surplomb (29) qui permet de prendre les panneaux terminés (6) dans la coque inférieure (7) du moule (2) et les transférer successivement dans un empilage à partir du dessus sur les chariots d'enlèvement (27).
